# EUROPEAN PATENT SPECIFICATION

(11) **EP 2 246 584 B1**
(45) Date of publication and mention of the grant of the patent: **01.01.2014**
(21) Application number: 09005850.4
(22) Date of filing: 27.04.2009
(51) Int. Cl.: F16D 13/68

(54) **Clutch**
Kupplung
Embrayage

(43) Date of publication of application: 03.11.2010
(73) Proprietor: Transmisiones y Equipos Mecánicos, S.A. de C.V., Queretaro, 76120 (MX)
(72) Inventor: de Mazière, Filip, 9070 Heusden-Destelbergen (BE)
(74) Representative: Kitzhofer, Thomas

(56) References cited:
- EP-A- 1 371 867
- EP-A- 1 382 872
- EP-A- 1 589 244
- EP-A- 1 882 863

## Description

The present invention relates to a clutch, in particular to a hydraulic double clutch for a transmission of a motor, according the preamble part of claim 1.

This clutch comprises a drive drum having a plurality of circumferentially disposed connecting crowns and a drive plate having a plurality of circumferentially disposed slots into which the connecting crowns extend to provide a drive connection between the drive drum and the drive plate.

The drive plate and drive drum can be connected also in different ways such as a spline connection.

However, due to torque fluctuations in the drive chain during torque transmission a rattling noise is generated by a relative movement of these crowns within the slots having a width being greater than the width of the connecting crowns. This rattle movement generated by the play between crowns and slots also results in a deteriorated durability of the connection arrangement between drive plate and drive drum.

EP-A-1 589 244 shows a clutch according to the preamble of claim 1, in which a drive plate is elastically biased in an axial direction with respect to the drum so as to prevent rattling noises.

EP-A-1 371 867 shows a drive plate for a lamella coupling which is provided with a spring engaging with a non-driven side wall of a connecting crown of a clutch drum.

It is, therefore, an object underlying the present invention to provide a clutch according to the preamble part of claim 1 that is able to reduce the generation of noise as far as possible.

The solution of this object is achieved by the features of claim 1.

According to the present invention the object is solved by providing a spring connected to the drive plate and abutting against the non-driven side of the crowns in the drive drum. By connecting the drive drum crowns inside the slots, the spring get preloaded. This preload force is high enough to generate a torque which is at least as high as the negative torque peaks created by the driveline vibrations. This way the driving flanks of the slot-crown connection remain always in contact and noise is avoided.

Additionally, the crowns are chamfered so that they can be inserted easily inside the slots.

In a preferred embodiment the springs are integrated in the drive plate as elastic fingers which are manufactured in the same process steps as for stamping or punching the drive plate. By integrating these fingers in the relatively big drive plate, these fingers can be made quite long.

The bending of the fingers is limited because the tangential relative movement of the crowns inside the slots is restricted by the play between the crowns and the slots. These both factors, namely the long springs and the small tangential movement, keep the mechanical stress in the finger material below critical values.

The dependent claims contain advantageous embodiments of the present invention.

Further features and advantages of the present invention will become apparent from the following description of a preferred embodiment with reference to the appended drawings, wherein
Fig. 1 shows a cross-sectional view of a drive plate and a drive drum of a clutch according to the present invention,
Fig. 2 shows a perspective view of the drive plate of the clutch including three circumferentially disposed spring devices, and
Fig. 3 shows an enlarged partial perspective view of the drive plate of Fig. 2 according to the present invention.

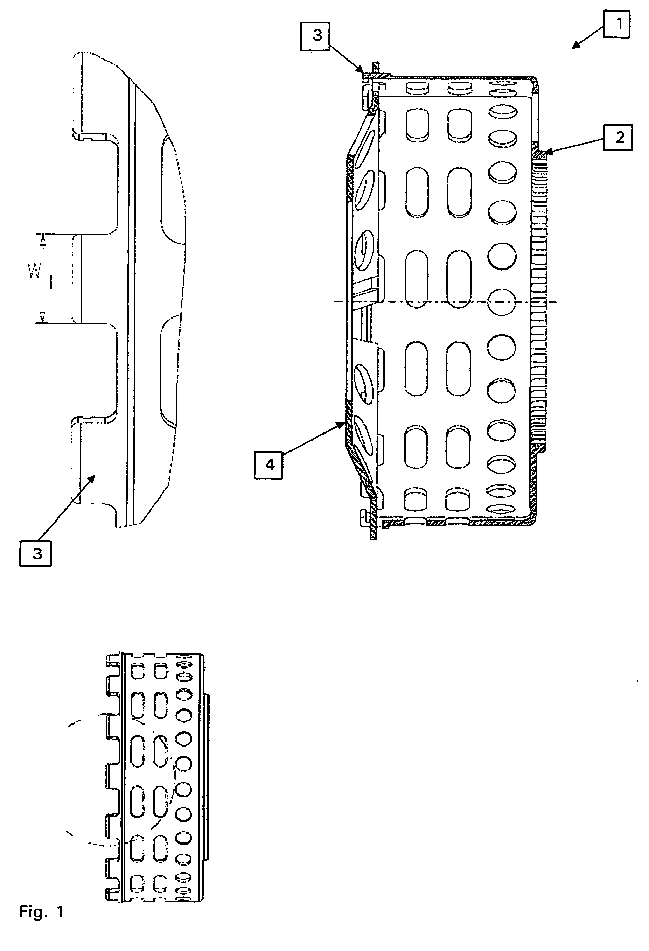

Fig. 1 shows cross sectional view of a drive plate 4 and a drive drum 2 of a clutch 1 that is not depicted in its entirety but comprises, of course, all other components of a clutch as well. The drive plate 4 is connected to the motor (not shown) whilst the drive drum 2 is connected to the clutch input. The drive plate 4 is connected to the drive drum 2 by engaging a plurality of connecting crowns 3 disposed circumferentially on the drive drum 2 with circumferentially disposed associated slots 5, 6 having a predetermined width which are provided on the drive plate 4.

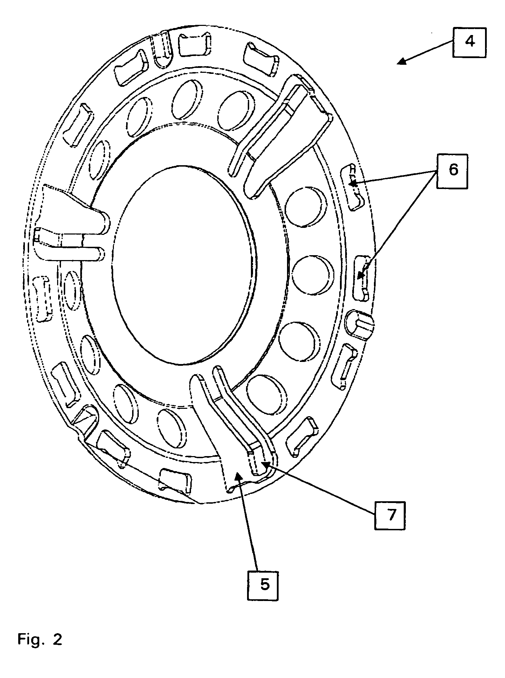

Fig. 2 shows a perspective view of the drive plate 4 of the clutch 1 including, in this case, three circumferentially disposed springs 7 and associated slots 5. As can be seen from Fig. 2 these springs 7 are circumferentially disposed at intervals of 120° on the drive plate 4 next to the slots 5 and follow the contour of the cup-shaped drive plate 4. When the connecting crowns 3 of the drive drum 2 are inserted into the slots 5, 6 of the drive plate 4 to provide a drive connection, the springs 7 are abutting firmly against the side walls of the associated crowns 3. By this spring-forced abutment a movement of the connecting crowns 3 in the slots 5, 6 and the generation of the rattling noise is prevented.

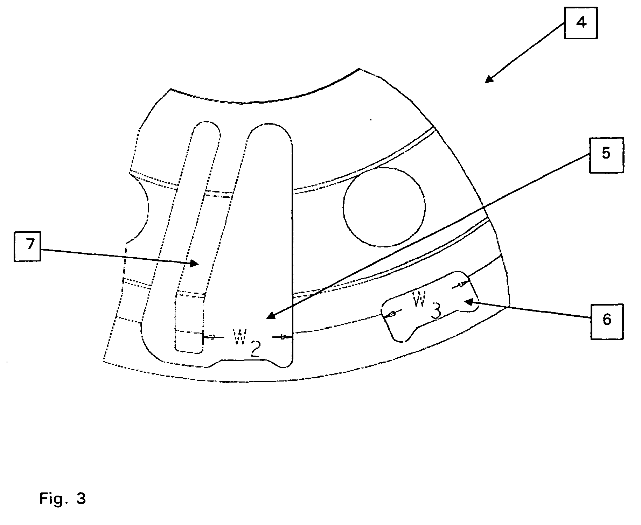

Fig. 3 shows an enlarged partial view of the drive plate 4 and one of its springs 7 according to the present invention taking the form of a spring finger connected with the drive plate 4. The predetermined width W2 of the slot 5 with spring 7 is set smaller than the width W1 of the crowns 3 of Fig. 1. The width W3 of all the slots 6 without a spring (Fig. 2) is slightly larger than the width W1 of the crowns 3.

Moreover this spring 7 can be an integral part of the drive plate 4, e. g. being punched out of the drive plate 4, and being disposed between two neighboring slots 5 and 6 (the latter not shown on the figures.).

In addition to the written disclosure reference is herewith made explicitly to the disclosure of the invention in Fig. 1 to 3.

### List of reference signs

- 1: clutch
- 2: drive drum
- 3: connecting crown
- 4: drive plate
- 5: Slot with spring
- 6: Slot without spring
- 7: Spring
- W1: Width of crown
- W2: Width of slot 5 (with spring)
- W3: Width of slot 6 (without spring)

## Claims

1. Clutch (1), comprising
- a drive drum (2) having a plurality of circumferentially disposed connecting crowns (3) having a predetermined first width (W1), and
- a drive plate (4) having a plurality of circumferentially disposed slots (6) having a predetermined second width (W3) being slightly greater than the first width (W1) and into which the connecting crowns (3) extend to provide a drive connection between the clutch drum (2) and the clutch plate (4), **characterized by**
- a spring (7) connected with the drive plate (4) and firmly abutting against an associated non-driven side wall of the connecting crown (3) of the clutch drum (2)
- the crowns (3) being chamfered so that the crowns (3) of the first width (W1) can be mounted easily inside the slots (5) with a smaller width (W2).

2. Clutch (1) according to claim 1 **characterized in that** the spring (7) is an integral part of the clutch plate (4).

3. Clutch (1) according to claim 1 or 2 **characterized in that** the resultant force of all springs (7) is zero, so that a pure moment between drive plate (4) and drive drum (2) is transmitted by the springs (7).

4. Clutch (1) according to any one of claims 1 to 3 **characterized in that** the spring (7) takes the form of a spring finger.

5. Clutch (1) according to any one of claims 1 to 4 **characterized in that** the spring (7) gets preloaded by mounting the drive plate crowns inside the slots (5) the widths (W2) of which are smaller than the width (W1) of the crown.

6. Clutch (1) according to any one of claims 1 to 5 **characterized in that** the spring (7) is a part of the clutch plate (4) being punched or stamped out thereof.

7. Clutch (1) according to any one of claims 1 to 6 **characterized in that** the plurality of springs (7) are disposed at equal intervals.

8. Clutch (1) according to any one of claims 1 to 7 **characterized in that** a number of three springs (7) is disposed at intervals of 120°.

## Patentansprüche

1. Kupplung (1) mit
- einer Antriebstrommel (2), die mehrere über den Umfang angeordnete Verbindungskronen (3) mit einer vorbestimmten ersten Breite (W1) aufweist, und
- einer Antriebsscheibe (4), die mehrere über den Umfang angeordnete Schlitze (6) mit einer vorbestimmten zweiten Breite (W3), die geringfügig größer als die erste Breite (W1) ist, aufweist, in die sich die Verbindungskronen (3) zur Bereitstellung einer Antriebsverbindung zwischen der Kupplungstrommel (2) und der Kupplungsscheibe (4) erstrecken, **gekennzeichnet durch**
- eine Feder (7), die mit der Antriebsscheibe (4) verbunden ist und fest an einer zugeordneten, nicht angetriebenen Seitenwand der Verbindungskrone (3) der Kupplungstrommel (2) anliegt,
- wobei die Kronen (3) so abgeschrägt sind, dass die Kronen (3) mit der ersten Breite (W1) leicht in den Schlitzen (5) mit einer kleineren Breite (W2) angebracht werden können.

2. Kupplung (1) nach Anspruch 1, **dadurch gekennzeichnet, dass** die Feder (7) ein integraler Bestandteil der Kupplungsscheibe (4) ist.

3. Kupplung (1) nach Anspruch 1 oder 2, **dadurch gekennzeichnet, dass** die resultierende Kraft sämtlicher Federn (7) Null ist, so dass von den Federn (7) ein reines Moment zwischen der Antriebsscheibe (4) und der Antriebstrommel (2) übertragen wird.

4. Kupplung (1) nach einem der Ansprüche 1 bis 3, **dadurch gekennzeichnet, dass** die Feder (7) in Form eines Federfingers ausgeführt ist.

5. Kupplung (1) nach einem der Ansprüche 1 bis 4, **dadurch gekennzeichnet, dass** die Feder (7) vorgespannt wird, indem die Antriebsscheibenkronen in den Schlitzen (5) angebracht werden, deren Breite (W2) kleiner als die Breite (W1) der Krone ist.

6. Kupplung (1) nach einem der Ansprüche 1 bis 5, **dadurch gekennzeichnet, dass** die Feder (7) ein Teil der Kupplungsscheibe (4) ist, der aus dieser ausgestanzt bzw. ausgeschnitten ist.

7. Kupplung (1) nach einem der Ansprüche 1 bis 6, **dadurch gekennzeichnet, dass** die mehreren Federn (7) in gleichen Abständen angeordnet sind.

8. Kupplung (1) nach einem der Ansprüche 1 bis 7, **dadurch gekennzeichnet, dass** eine Anzahl von drei Federn (7) in Abständen von 120° angeordnet ist.

## Revendications

1. Embrayage (1), comportant
- un tambour d'entraînement (2) présentant une pluralité de couronnes de liaison (3) disposées circonférentiellement et ayant une première largeur prédéterminée (W1), et
- un disque d'entraînement (4) présentant une pluralité de rainures (6) disposées circonférentiellement et ayant une seconde largeur prédéterminée (W3) qui est légèrement supérieure à la première largeur (W1), et dans lesquelles viennent s'engager les couronnes de liaison (3) pour assurer une liaison d'entraînement entre le tambour d'embrayage (2) et le disque d'embrayage (4), **caractérisé par**
- un ressort (7) relié au disque d'entraînement (4) et butant fermement contre une paroi latérale associée non actionnée de la couronne de liaison (3) du tambour d'embrayage (2),
- les couronnes (3) étant chanfreinées de telle sorte que les couronnes (3) de la première largeur (W1) sont aptes à être montées facilement à l'intérieur des rainures (5) présentant une largeur inférieure (W2).

2. Embrayage (1) selon la revendication 1, **caractérisé en ce que** le ressort (7) fait partie intégrale du disque d'embrayage (4).

3. Embrayage (1) selon la revendication 1 ou 2, **caractérisé en ce que** la force résultante de tous les ressorts (7) est nulle, de telle sorte qu'un couple net entre le disque d'entraînement (4) et le tambour d'entraînement (2) est transmis par les ressorts (7).

4. Embrayage (1) selon l'une des revendications 1 à 3, **caractérisé en ce que** le ressort (7) prend la forme d'un doigt de ressort.

5. Embrayage (1) selon l'une des revendications 1 à 4, **caractérisé en ce que** le ressort (7) est précontraint lorsque les couronnes du disque d'entraînement sont montées à l'intérieur des rainures (5) dont les largeurs (W2) sont inférieures à la largeur (W1) de la couronne.

6. Embrayage (1) selon l'une des revendications 1 à 5, **caractérisé en ce que** le ressort (7) fait partie du disque d'embrayage (4) en étant coupé ou poinçonné dans celui-ci.

7. Embrayage (1) selon l'une des revendications 1 à 6, **caractérisé en ce que** la pluralité de ressorts (7) sont disposés à des intervalles égaux.

8. Embrayage (1) selon l'une des revendications 1 à 7, **caractérisé en ce que** des ressorts (7) au nombre de trois sont disposés à des intervalles de 120°.
